# EUROPÄISCHE PATENTSCHRIFT

(11) **EP 4 098 920 B1**
(45) Veröffentlichungstag und Bekanntmachung des Hinweises auf die Patenterteilung: **08.01.2025**
(21) Anmeldenummer: 22175061.5
(22) Anmeldetag: 24.05.2022
(51) Int. Cl.: F16L 5/04, A62C 2/06, H02G 3/22, H02G 3/04

(54) **VERFAHREN ZUM HERSTELLEN EINER ABSCHOTTUNG AN EINER EINE ROHR- ODER MEDIENLEITUNG AUFWEISENDEN GEBÄUDEWANDUNGSDURCHDRINGUNG UND LEITUNGSSYSTEM MIT EINER SOLCHEN ABSCHOTTUNG**
METHOD FOR MAKING A BULKHEAD ON A BUILDING WALL PENETRATION HAVING A PIPE OR MEDIUM CONDUIT AND CONDUIT SYSTEM WITH SUCH A BULKHEAD
PROCÉDÉ DE FABRICATION D'UN CLOISONNEMENT SUR UNE TRAVERSÉE DE MUR DE BÂTIMENT COMPRENANT UNE CONDUITE TUBULAIRE OU DE MILIEU ET SYSTÈME DE CONDUITES DOTÉ D'UN TEL CLOISONNEMENT

(30) Priorität: 02.06.2021 DE 102021114371
(43) Veröffentlichungstag der Anmeldung: 07.12.2022
(73) Patentinhaber: Viega Technology GmbH & Co. KG, 57439 Attendorn (DE)
(72) Erfinder: Berger, Markus, 57462 Olpe-Sondern (DE)
(74) Vertreter: Cohausz & Florack

(56) Entgegenhaltungen:
- EP-A1- 1 165 900
- EP-A1- 1 814 634
- EP-A2- 2 633 110
- WO-A1-2004/001291
- DE-A1- 19 905 103
- DE-A1- 4 113 375
- DE-U1- 202013 100 836
- RU-C1- 2 705 620

## Beschreibung

Die Erfindung betrifft ein Verfahren zum Herstellen einer Abschottung an Gebäudewandungsdurchdringungen, wobei mindestens eine Wandung eines Gebäudes von Rohr- oder Medienleitungen durchdrungen ist oder wird, wobei die Rohr- oder Medienleitungen durch in der Gebäudewandung vorhandene oder hergestellte Durchgangsöffnungen, beispielsweise Durchgangsbohrungen, geführt sind oder werden, wobei die jeweilige Durchgangsöffnung zumindest eine Laibung definiert, nach dem Oberbegriff des Anspruchs 1. Zum Herstellen der Abschottung werden als Rohrschalen aus Mineralfasern ausgebildete flexible Manschetten verwendet und zur Ummantelung der Rohr- oder Medienleitungen im Bereich der Durchgangsöffnungen derart angeordnet, dass die betreffende Manschette unmittelbar an die Laibung der betreffenden Durchgangsöffnung anschließt und die Durchgangsöffnung hitzeresistent und rauchdicht verschließt.

Des Weiteren betrifft die Erfindung ein Leitungssystem umfassend Rohr- oder Medienleitungen, beispielsweise elektrische Leitungen, die eine Gebäudewandung, beispielsweise eine im Wesentlichen vertikal oder horizontal ausgerichtete Gebäudewandung durchdringen, mit einer entsprechend dem erfindungsgemäßen Verfahren hergestellten Abschottung.

Eine bekannte Maßnahme zum vorbeugenden Brandschutz ist die Abgrenzung (Abschottung) einzelner Brandabschnitte gegenüber anderen Gebäudeteilen. Die Brandabschnitte werden durch raumabschließende Bauteile mit Widerstand gegen Feuer voneinander getrennt. Dazu gehören unter anderem Gebäudeinnenwände und Geschossdecken. Diese Bauteile sollen den Brand während einer definierten Zeit auf den von ihnen definierten Brandabschnitt begrenzen.

Nach der Erfahrung des Erfinders werden Durchgangsöffnungen für Rohrleitungen in Gebäudewandungen oft nicht passend auf die Durchmesser der dem Brandschutz dienenden Abschottungsprodukte geplant bzw. hergestellt. Dadurch entstehen dann hohe Kosten für den nachträglichen Verschluss von Ringspalten bzw. für die erneute Herstellung einer passenden Durchgangsöffnung. Da die Durchdringungen von Gebäudewänden und Geschossdecken in der Regel brandschutzrelevant sind, ist ein Anwendbarkeitsnachweis für Rohrleitungssysteme mit Abschottungen für den Brandschutz genau umzusetzen.

Es ist bekannt, Durchgangsöffnungen für Rohrleitungen in Gebäudewandungen als Bohrungen - üblicherweise als Kernbohrungen - auszuführen. Herkömmlicherweise werden solche Durchgangsbohrungen derart bemessen und ausgeführt, dass zwischen der Laibung der Bohrung und einer aus Mineralfasern gefertigten Brandschutz-Rohrschale, welche die durch die Bohrung hindurchgeführte Rohrleitung im Bereich der Bohrung ummantelt, zunächst ein Ringspalt verbleibt, der dann mit nicht brennbarem Baustoff, wie z. B. Mörtel, Gips, Beton oder ähnlichem, verschlossen werden muss. Das Verschließen des Ringspaltes ist zeitaufwendig und verursacht Material- und Arbeitskosten.

Der nachträgliche Verschluss des Ringspaltes kann häufig aufgrund beengter Platzverhältnisse, z. B. aufgrund hoher Belegungsdichte eines Versorgungsschachtes mit Rohrleitungen, nicht in voller Dicke (Stärke) der betreffenden Gebäudewandung, z. B. Geschossdecke, oder nicht ausreichend rauchdicht und feuerresistent hergestellt werden. Zudem ist eine zuverlässige Prüfung des Ringspaltverschlusses von außen kaum möglich oder sehr schwierig.

Aus der EP 1 236 942 A ist eine Abschottung für eine Durchgangsöffnung in einer Gebäudewandung bekannt. Die als Bohrung ausgebildete Durchgangsöffnung hat eine Laibung und ist für die Durchführung einer Leitung für Energie- und/oder Informationsträger vorgesehen. Die Abschottung weist eine die Leitung im Bereich der Durchgangsöffnung ummantelnde, als Rohrschale aus Mineralfasern ausgebildete Manschette auf. Die Manschette schließt unmittelbar an die Laibung der Durchgangsöffnung an und verschließt die Durchgangsöffnung in radialer und axialer Richtung vollständig hitzeresistent und rauchdicht. Die Manschette soll mitunter einen gegenüber dem Durchmesser der Durchgangsöffnung geringfügig größeren Außendurchmesser aufweisen, um zwischen der Manschette und der Durchgangsöffnung einen Reibschluss und die damit gegebene Abdichtung zu erzielen.

Bedingt durch unterschiedliche Dimensionen der mit Brandschutzdämmmaterial zu ummantelnden Rohrleitungen und unterschiedliche Dämmstärken der hierzu verwendeten Rohrschalen oder Matten, werden auf den Baustellen viele unterschiedliche Durchgangsöffnungen hergestellt. Die Größe der jeweiligen Durchgangsöffnung ist abhängig von der Dimension der durch die Öffnung hindurchzuführenden Rohrleitung und der zu erfüllenden Dämm- bzw. Brandschutzanforderung. Wenn die Durchgangsöffnungen einmal hergestellt sind, ist ein Wechsel in der Leitungsbelegung, z. B. eine Änderung der Leitungsdimension, häufig nicht mehr möglich. Des Weiteren verursachen unterschiedliche Größen der Durchgangsöffnungen relativ hohe Herstellkosten für die Öffnungen, da dadurch z. B. verschiedene Kernbohrkronen zur Herstellung unterschiedlicher Kernbohrungen erforderlich sind sowie entsprechende Rüstzeiten für die unterschiedlichen Bohrkronengrößen bzw. Bohrwerkzeuge anfallen.

Die EP 2 633 110 A offenbart ein Verfahren zur Feuerabschottung einer Durchdringung, welches von einem schmelzbaren anorganischen Fasermischgewebe Gebrauch macht. Die schmelzbare anorganische Mischfaserbahn kann eine feuerbeständige Durchdringung ohne die Verwendung von Dichtungsmitteln, intumeszierenden Materialien und dergleichen bereitstellen. In einer Ausführungsform des Verfahrens wird die Mischfaserbahn in die Durchdringung eingebracht und darin um einen Volumenfaktor von etwa 10% bis etwa 30% gegenüber seinem unverdichteten Ursprungszustand verdichtet und danach in dem verdichten Zustand gehalten.

Die EP 1 165 900 A offenbart ein Verfahren zur Herstellung einer brandgeschützten Durchführung einer Leitung durch ein Loch in einer Wand. Die Leitung wird dabei mit einer durchgehenden Rohrisolierung versehen, die aus Mineralwolle hergestellt ist. Der Raum zwischen der Lochwand und der Rohrisolierung wird mit gepackter, radial komprimierter, feuerhemmender Mineralwolle, beispielsweise Steinwolle, ausgefüllt. In allen in der EP 1 165 900 A gezeigten Ausführungsbeispielen wird die gepackte Mineralwolle im Inneren des Zwischenraumes angeordnet, worauf folgend die jeweiligen Lochöffnungen mit Füllmaterial wie etwa Mörtel oder Gips ausgefüllt werden. Dieses Verfahren ist aufgrund der Verwendung mehrerer verschiedener Materialien zur Herstellung einer einzelnen brandgeschützten Durchführung material- und zeitaufwendig.

Die RU 2 705 620 C1 zeigt eine Brandschutzvorrichtung zum Abdichten von Kabeldurchführungsstellen durch Gebäudestrukturen. Die Vorrichtung umfasst einen feuerbeständigen Kabeltunnel für Wände und Böden von Gebäuden, der mindestens ein elektrisches Kabel enthält, um das ein auf bis zu 40 % des Ausgangsvolumens komprimiertes Verformungselement aus nicht brennbaren Basaltfasern angeordnet ist, welches seinerseits in einer nicht brennbaren Hülle aus Quarzgewebe untergebracht ist. Die Endflächen des Verformungselement sind auf beiden Seiten mit einer feuerbeständigen, nicht brennbaren Verbundplatte geschlossen.

Aus der DE 41 13 375 A1 ist eine Feuerschutzanordnung für einen Kanalabschnitt einer Kunststoff-Rohrleitung in einer Brandschutzwand bekannt, bei der das Kunststoffrohr sich in einem Durchgangsloch in der Brandschutzwand befindet und das Durchgangsloch mit einem feuerfesten Material gefüllt ist. Des Weiteren ist bei dieser Anordnung ein Stützbehälter vorhanden, der einen Abschnitt aufweist, der das feuerfeste Material mit der äußeren Umfangsfläche des Kunststoffrohrs in Berührung kommen lässt. Zudem hat der Stützbehälter Abschnitte zum Aufnehmen eines aufschäumbaren Materials. Der Stützbehälter ist dabei um das Kunststoffrohr herum angeordnet; und das feuerfeste Material ist in den Abschnitt des Stützbehälters eingefüllt, indem es mit der Außenumfangsfläche des Kunststoffrohres in Berührung kommt.

Aus der DE 199 05 103 A1 ist eine Vorrichtung zur abdichtenden Einfassung von Leitungssträngen in einer Mauer-, Decken- oder Bodenöffnung eines Gebäudes bekannt, die aus einer den Leitungsstrang ummantelnden Manschette besteht, die bei Brandeinwirkung hitzeresistent und rauchdicht ist. Die Manschette ist als Rohrschale aus Mineralfasern ausgebildet und in Achsrichtung und in Radialrichtung flexibel. Zudem weist die Vorrichtung ein Schott auf, das an der Mantelfläche der Manschette anschließt und die Mauer-, Decken- bzw. Bodenöffnung ausgefüllt.

Die EP 1 814 634 A offenbart ein längliches Brandschutzelement zur feuerhemmenden Abdichtung von Rohr- und Kabeldurchführungen, das aus einem intumeszierendem Schaumstoff hergestellt und formstabil verformbar ist. Das Brandschutzelement ist vorzugsweise zylindrisch ausgebildet und weist eine Länge von 10 cm bis 150 cm auf.

Die WO 2004/001291 offenbart eine Vorrichtung zur Führung und Ausleitung von Abluft, wie etwa Rauchgas, die bzw. das von einer in einem Gebäude installierten Heizungseinrichtung erzeugt wird, mit einer die bei der Verbrennung entstehende Abluft führenden Leitung und einer die Leitung umgebenden Außenschale, wobei zwischen der Leitung und der Außenschale eine als Formelement aus Mineralwolle ausgebildete Wärmedämmeinrichtung angeordnet ist. Die Leitung ist durch zumindest eine Geschossdecke geführt, wobei die Außenschale im Bereich der Geschossdecke unterbrochen ausgebildet ist. Zwischen der Leitung und der Geschossdecke ist ein, einen Spaltraum zwischen der Leitung und der Geschossdecke dichtend ausfüllendes Dämmelement angeordnet.

Die DE 20 2013 100 836 U1 offenbart ein Rohrleitungsordnung zur Durchführung eines Metallrohres, insbesondere Kupferrohres, durch eine Wand oder Decke eines Gebäudes, bei der das Rohr mit einer nicht feuerbeständigen Isolierung versehen ist, auf der außenseitig eine Lage eines im Brandfall aufschäumenden Materials im Schottbereich zum Brandschutz angebracht ist. Die Isolierung ist dabei ein- oder beidseitig des Schottbereichs angrenzend an die Wand oder Decke mit einem Klebeband umhüllt.

Der vorliegenden Erfindung liegt die Aufgabe zugrunde, ein Verfahren bzw. ein Leitungssystem der eingangs genannten Art anzugeben, welches die oben genannten Nachteile des Standes der Technik zumindest teilweise vermeidet und Kostenvorteile bietet.

Gelöst wird diese Aufgabe durch ein Verfahren mit den in Anspruch 1 angegebenen Merkmalen. Vorteilhafte Ausgestaltungen des erfindungsgemäßen Verfahrens sind in den auf Anspruch 1 rückbezogenen Ansprüchen angegeben.

Bei dem erfindungsgemäßen Verfahren wird zumindest eine Manschette der eingangs genannten Art zum Herstellen der Abschottung in Bezug auf das quer zur Längsachse der Rohr- oder Medienleitung gerichtete Innenmaß der Durchgangsöffnung und/oder den Außendurchmesser der zu ummantelnden Rohr- oder Medienleitung derart ausgewählt, dass das quer zur Längsachse der Rohr- oder Medienleitung gerichtete Außenmaß der Manschette größer ist als das sich im Wesentlichen parallel zu dem Außenmaß erstreckende Innenmaß der Durchgangsöffnung, wobei die Manschette eine Dämmdicke aufweist, die im eingebauten Zustand der Manschette in der Durchgangsöffnung im Vergleich zur Lage außerhalb der Durchgangsöffnung oder zum nicht eingebauten Zustand der Manschette um ein Verhältnis komprimiert wird, das im Bereich von 5% bis 50%, vorzugsweise im Bereich von 8% bis 33%, besonders bevorzugt im Bereich von 10% bis 30%, insbesondere im Bereich von 15% bis 30% liegt.

Das erfindungsgemäße Verfahren ermöglicht einen rauchdichten und hitzeresistenten Verschluss einer Durchgangsöffnung, vorzugsweise Durchgangsbohrung, bei unterschiedlichem Rohrleitungsdurchmesser und/oder unterschiedlicher Dämmdicke der Manschette. Bei der Durchgangsöffnung kann es sich auch um eine nicht kreisrunde Durchgangsöffnung, insbesondere um eine eine rechteckige, polygonale, ovale oder unregelmäßige Querschnittskontur aufweisende Durchgangsöffnung handeln. Für die Komprimierung der Manschette im Bereich der Durchgangsöffnung sind weder Zuschnittarbeiten noch aufwendige Vorrichtungen erforderlich. Beispielsweise können erfindungsgemäß in mehrere Durchgangsöffnungen mit im Wesentlichen gleichem Innenmaß oder Innendurchmesser Rohr- oder Medienleitungen mit unterschiedlichem Außenmaß oder Außendurchmesser eingebaut werden, wobei die zur Ummantelung der Leitungen im Bereich der Durchgangsöffnungen verwendeten flexiblen Manschetten im Wesentlichen gleiche Dämmdicken aufweisen. Im Vergleich dazu werden hierfür nach herkömmlichem Stand der Technik Durchgangsbohrungen mit zwei, drei oder sogar vier unterschiedlichen Innendurchmessern hergestellt. Die vorliegende Erfindung ermöglicht dagegen die Realisierung rauchdichter und hitzeresistenter Verschlüsse an durch Rohr- oder Medienleitungen mit unterschiedlichem Außenmaß oder Außendurchmesser bedingten Gebäudewandungsdurchdringungen, wobei die Durchgangsöffnungen mit nur einem Innenmaß oder Innendurchmesser ausgeführt werden können bzw. werden. Dies bietet erhebliche Kostenvorteile. Denn Kosten, die beim herkömmlichen Stand der Technik insbesondere durch Bereitstellung unterschiedlicher Werkzeuge bzw. Kernbohrkronen und Werkzeugwechsel- und Rüstkosten verursacht werden, können durch die Erfindung deutlich reduziert werden. Zudem können durch die erfindungsgemäße Komprimierung der in die Durchgangsöffnungen einzubauenden flexiblen Manschetten auf bis zu 50%, vorzugsweise bis 33%, besonders bevorzugt bis 30% ihrer Dämmdicke die notwendigen Innendurchmesser der Durchgangsöffnungen selbst auf ein Minimum reduziert werden. Kleine Kernbohrungen sind kostengünstiger als größere Kernbohrungen. Außerdem ermöglichen kleinere Durchgangsöffnungen, vorzugsweise Durchgangsbohrungen, die Belegungsdichte eines Versorgungsschachtes mit Rohr- oder Medienleitungen zu erhöhen, wodurch die notwendige Querschnittsfläche des Versorgungsschachtes verringert und damit die an den Versorgungsschacht angrenzende, verkauf- bzw. vermietbare Nutzfläche größer wird. Anders ausgedrückt, lassen sich durch eine erhöhte Belegungsdichte ein geringerer Platzbedarf und damit eine Reduzierung von Baukosten erzielen.

Das erfindungsgemäße Verfahren bietet somit erhebliche Kostenvorteile gegenüber dem herkömmlichen Stand der Technik.

Die oben angegebene Formulierung "in Bezug auf das quer zur Längsachse der Rohr- oder Medienleitung gerichtete Innenmaß der Durchgangsöffnung" ist nicht als Beschränkung auf ein rechtwinklig zur Längsachse der Rohr- oder Medienleitung gerichtetes Innenmaß der Durchgangsöffnung zu verstehen. Vielmehr hat hier das Wort "quer" auch die Bedeutung von "schräg". Es kann hier somit auch von einem im Wesentlichen rechtwinklig oder schräg zur Längsachse der Rohr- oder Medienleitung gerichteten Innenmaß der Durchgangsöffnung gesprochen werden.

Erfindungsgemäß können in mehrere Durchgangsöffnungen mit im Wesentlichen gleichem Innenmaß oder Innendurchmesser Rohr- oder Medienleitungen mit unterschiedlichem Außenmaß oder Außendurchmesser eingebaut werden, wobei die zur Ummantelung der Leitungen im Bereich der Durchgangsöffnungen verwendeten flexiblen Manschetten nicht nur im Wesentlichen gleiche Dämmdicken sondern mitunter auch oder alternativ verschiedene Dämmdicken aufweisen können, wobei zumindest eine oder mehrerer dieser Manschetten erfindungsgemäß um ein Verhältnis komprimiert wird, das im Bereich von 5% bis 50%, vorzugsweise im Bereich von 8% bis 33%, besonders bevorzugt im Bereich von 10% bis 30%, insbesondere im Bereich von 15% bis 30% liegt.

Eine bevorzugte Ausgestaltung der Erfindung sieht vor, dass die mindestens eine Manschette eine Dämmdicke aufweist, die im eingebauten Zustand der Manschette in der Durchgangsöffnung im Vergleich zur Lage außerhalb der Durchgangsöffnung oder zum nicht eingebauten Zustand der Manschette um ein Verhältnis komprimiert wird, welches im Bereich von 15% bis 40%, vorzugsweise im Bereich von 20% bis zu 33%, besonders bevorzugt im Bereich von 20% bis 30% liegt. Hierdurch lassen sich die voranstehend dargelegten Kostenvorteile in hohem Maße erzielen.

Erfindungsgemäß werden eine Vielzahl von Gebäudewandungsdurchdringungen des Gebäudes abgeschottet, wobei eine Vielzahl der Durchgangsöffnungen, vorzugsweise Durchgangsbohrungen, der Gebäudewandungsdurchdringungen das gleiche Innenmaß oder den gleichen Durchmesser aufweist, wobei durch eine Vielzahl solcher Durchgangsöffnungen mit gleichem Innenmaß oder gleichem Durchmesser Rohr- oder Medienleitungen mit unterschiedlichen Außendurchmessern geführt sind oder werden, wobei zum Herstellen der Abschottungen jeweils mindestens eine Manschette der im Anspruch 1 angegebenen Art verwendet und zur Ummantelung der Rohr- oder Medienleitung im Bereich der betreffenden Durchgangsöffnung derart angeordnet wird, dass die Manschette unmittelbar an die Laibung der Durchgangsöffnung anschließt und die Durchgangsöffnung hitzeresistent und rauchdicht verschließt, und wobei mindestens eine der Manschetten derart in die betreffende Durchgangsöffnung eingebracht wird, dass die Manschette im eingebauten Zustand in der Durchgangsöffnung komprimiert ist. Hierdurch lassen sich die oben dargelegten Kostenvorteile in hohem Maße erzielen. Eine Vielzahl der Durchgangsöffnungen werden in diesem Fall vorzugsweise mit dem gleichen Werkzeug, z. B. der gleichen Kernbohrkrone hergestellt, wodurch Kosten, die andernfalls durch Bereitstellung unterschiedlicher Werkzeuge bzw. Kernbohrkronen und Werkzeugwechsel- und Rüstkosten verursacht werden, zumindest teilweise vermieden werden können.

Das erfindungsgemäße Verfahren umfasst insbesondere Ausgestaltungen, bei denen die in verschiedene der Durchgangsöffnungen angeordneten flexiblen Manschetten unterschiedliche Dämmdicken aufweisen. Hierdurch kann insbesondere dann, wenn die zu dämmenden, in die Durchgangsöffnungen eingebauten Rohr- oder Medienleitungen unterschiedliche Durchmesser aufweisen, eine sehr gute Abschottung mit hoher Brandschutzwirkung erzielt werden. Die Manschetten können beispielsweise Dämmdicken im Bereich von ca. 20 mm bis ca. 100 mm, vorzugsweise im Bereich von ca. 20 mm bis ca. 50 mm aufweisen.

Eine weitere vorteilhafte Ausgestaltung des erfindungsgemäßen Verfahrens ist dadurch gekennzeichnet, dass die in verschiedene der Durchgangsöffnungen angeordneten flexiblen Manschetten unterschiedliche Rohdichten aufweisen. Hierdurch lassen sich die Manschetten unterschiedlich stark komprimieren. Bei Durchgangsöffnungen mit einem vorgegebenen gleichen Innenmaß bzw. gleichen Innendurchmesser und darin anzuordnenden Rohr- oder Medienleitungen mit verschiedenen Außendurchmessern lassen sich somit durch Komprimierung der Manschetten im Bereich der Durchgangsöffnungen jeweils hohe, insbesondere weitgehend oder nahezu gleich hohe Materialdichten der Manschetten innerhalb der Durchgangsöffnungen erzielen.

Die aus Mineralfasern ausgebildete flexible Manschette kann beispielsweise eine Rohdichte im Bereich von 15 bis 130 kg/m³, insbesondere im Bereich von 18 bis 120 kg/m³, beispielsweise im Bereich von 35 bis 130 kg/m³ aufweisen. Manschetten mit einer derartigen Rohdichte können mit einer ausreichenden Elastizität hergestellt werden und bieten zugleich eine ausreichende Materialdichte, um an der abzuschottenden Gebäudewandungsdurchdringung die geforderte Rauchabdichtung und Hitzeresistenz zu gewährleisten.

Die Manschette ist vorzugsweise aus Mineralwolle, beispielsweise Steinwolle und/oder aus Glaswolle mit einem Schmelzpunkt von mindestens 650°C, vorzugsweise von mindestens 1000°C hergestellt.

Nach einer weiteren vorteilhaften Ausgestaltung der Erfindung sind oder werden zwei oder mehr der Durchgangsöffnungen, vorzugsweise Durchgangsbohrungen, in der gleichen Gebäudewandung derart angeordnet, dass sie zueinander mit einem Abstand von weniger als 40 mm, vorzugsweise weniger als 35 mm, besonders bevorzugt weniger als 30 mm angeordnet sind. Der Abstand wird dabei vom Innenumfang der jeweiligen Durchgangsöffnung zu der benachbarten Durchgangsöffnung gemessen. Durch diese Ausgestaltung lässt sich bei begrenztem Bauraum für die abzuschottenden Rohr- oder Medienleitungen eine hohe Leitungsbelegungsdichte in dem Bauraum erzielen.

Eine weitere vorteilhafte Ausgestaltung der Erfindung ist dadurch gekennzeichnet, dass zwei oder mehr der Durchgangsöffnungen, vorzugsweise Durchgangsbohrungen, in der gleichen Gebäudewandung derart angeordnet sind oder werden, dass die darin anschließend eingebrachten Manschetten sich außerhalb der Durchgangsöffnungen am Außenumfang berühren. Hierdurch lässt sich bei begrenztem Bauraum für die abzuschottenden Rohr- oder Medienleitungen ein Optimum an Leitungsbelegungsdichte in dem Bauraum erzielen.

Eine weitere vorteilhafte Ausgestaltung der Erfindung ist dadurch gekennzeichnet, dass zwei oder mehr der Durchgangsöffnungen, vorzugsweise Durchgangsbohrungen, in der gleichen Gebäudewandung derart angeordnet sind oder werden, dass die darin anschließend eingebrachten Manschetten sich innerhalb der Gebäudewandung berühren. Auch hierdurch lässt sich bei begrenztem Bauraum für die abzuschottenden Rohr- oder Medienleitungen ein Optimum an Leitungsbelegungsdichte in dem Bauraum erzielen. Die Rohr- oder Medienleitungen müssen dabei nicht zwingend außerhalb der Gebäudewandung weiter gedämmt werden oder können dort dünner oder auch dicker als in der Gebäudewandung gedämmt werden.

Nach einer weiteren vorteilhaften Ausgestaltung der Erfindung weist die mindestens eine Manschette eine Länge auf, die zumindest der Länge oder Tiefe der Durchgangsöffnung entspricht. Somit lässt sich die Durchgangsöffnung in axialer Richtung vollständig hitzeresistent und rauchdicht verschließen. Beidseitig der Durchgangsöffnung kann die zu dämmende Rohr- oder Medienleitung mit Rohrschalen oder Matten wärme- und/oder schallisoliert werden. Der Außendurchmesser der beidseitig der Durchgangsöffnung angeordneten, die Leitung isolierenden Rohrschalen ist dabei vorzugsweise größer als das Innenmaß bzw. der Innendurchmesser der Durchgangsöffnung.

Nach einer weiteren vorteilhaften Ausgestaltung der Erfindung wird die mindestens eine Manschette so angeordnet, dass sie aus der Durchgangsöffnung zumindest einseitig herausragt. Hierdurch lässt sich an das aus der Öffnung herausragende Ende der Manschette auf einfache Weise eine weitere Manschette, die vorzugsweise als Rohrschale oder Matte ausgebildet ist, unmittelbar anschließen und mit der in der Durchgangsöffnung angeordneten Manschette zuverlässig, vorzugsweise im Wesentlichen spaltfrei verbinden. Diesbezüglich sieht eine weitere vorteilhafte Ausgestaltung der Erfindung vor, dass die mindestens eine Manschette so angeordnet wird, dass sie aus der Durchgangsöffnung beidseitig herausragt. In diesem Fall lassen sich an die beiden Enden der die Durchgangsöffnung in axialer Richtung vollständig hitzeresistent und rauchdicht verschließenden Manschette auf einfache Weise jeweils eine weitere Manschette, die vorzugsweise als Rohrschale ausgebildet ist, unmittelbar anschließen und mit der in der Durchgangsöffnung angeordneten Manschette zuverlässig, vorzugsweise im Wesentlichen spaltfrei verbinden.

Die aus Mineralfasern ausgebildete, in der Durchgangsöffnung erforderlichenfalls bis zu 40%, vorzugsweise bis zu 33% ihrer Dämmdicke komprimierte Manschette ist oder wird nach einer bevorzugten Ausgestaltung der Erfindung beispielsweise so bemessen, dass sie einseitig oder beidseitig mit einer Länge im Bereich von ca. 5 cm bis 110 cm, vorzugsweise im Bereich von ca. 5 cm bis 55 cm, aus der Durchgangsöffnung herausragt.

Eine andere vorteilhafte Ausgestaltung der Erfindung sieht vor, dass in die Durchgangsöffnung zwei Manschetten der in Anspruch 1 angegebenen Art von den gegenüberliegenden Enden der Durchgangsöffnung aus eingebracht werden, so dass die beiden Manschetten in der Durchgangsöffnung im Wesentlichen spaltfrei axial aufeinander folgen bzw. aneinander liegen. Die beiden Manschetten können dabei im Wesentlichen spaltfrei oder mit geringem Abstand zueinander axial aneinander liegen. Diese Ausgestaltung erleichtert mitunter das Einbringen besagter Manschette in die Durchgangsöffnung, insbesondere dann, wenn die Manschette beim Einbringen in die Durchgangsöffnung relativ stark komprimiert werden muss.

Wie oben bereits erwähnt, umfasst die Erfindung insbesondere Ausgestaltungen, bei denen die Rohr- oder Medienleitung einseitig oder beidseitig der Durchgangsöffnung mit einer oder mehreren Rohrschalen wärme- und/oder schallisoliert wird. In diesem Zusammenhang ist eine weitere vorteilhafte Ausgestaltung der Erfindung dadurch gekennzeichnet, dass mindestens eine der Rohrschalen mittels Klebeband, vorzugsweise nicht brennbarem oder schwer entflammbarem Klebeband, besonders bevorzugt aluminiumfolienkaschiertem Klebeband, mit der Manschette verbunden wird. Hierdurch lässt sich zuverlässig eine wärme- sowie schallisolierende Verbindung zwischen der in die Durchgangsöffnung eingebrachten Manschette und der außerhalb der Durchgangsöffnung angeordneten, sich an die Manschette anschließenden Rohrschale realisieren. Durch die Verwendung von Klebeband, vorzugsweise aluminiumfolienkaschiertem Klebeband, kann ein an der Stoßstelle zwischen Manschette und benachbarter Rohrschale möglicherweise auftretender Spalt, insbesondere Ringspalt, vollständig abgedeckt und damit abdichtend verschlossen werden. Somit wird eine im Wesentlichen spaltfreie Verbindung von Manschette und benachbarter Rohrschale erzielt. Das verwendete Klebeband, insbesondere Aluminiumklebeband hat beispielsweise eine Breite im Bereich von ca. 2 bis 20 cm, vorzugsweise eine Breite im Bereich von ca. 5 bis 10 cm.

Eine weitere vorteilhafte Ausgestaltung der Erfindung sieht vor, dass die aus Mineralfasern ausgebildete, in der Durchgangsöffnung erforderlichenfalls bis zu 50%, vorzugsweise bis zu 33% oder 30% ihrer Dämmdicke komprimierte Manschette unmittelbar an die Laibung der als Bohrung ausgebildeten Durchgangsöffnung anschließt, so dass die Manschette die Durchgangsöffnung in radialer Richtung und vorzugsweise auch in axialer Richtung vollständig hitzeresistent und rauchdicht verschließt, wobei die Manschette an zumindest einem ihrer Enden, das aus der Durchgangsöffnung herausragt, oder an beiden ihrer Enden, die aus der Durchgangsöffnung herausragen, jeweils eine Stoßstelle definiert, an der eine Rohrschale oder Matte zur Wärme- oder Schallisolierung der Rohr- oder Medienleitung angeschlossen und mit der Manschette verbunden wird, wobei diese Verbindung ohne Draht durchgeführt wird. Draht, insbesondere Bindedraht, wird in der Praxis zur Sicherung von Rohrschalen aus Mineralwolle empfohlen. Die Verbindung mit Draht, auch mechanische Sicherung genannt, ist sehr arbeitsaufwendig, wobei die Abdichtungswirkung des Drahtes eher gering ist. Anstelle von Draht oder Bindedraht wird bei einer Ausgestaltung des erfindungsgemäßen Verfahrens Klebeband, vorzugsweise nicht brennbares oder schwer entflammbares Klebeband, beispielsweise ein Aluminiumklebeband der oben genannten Art verwendet. Das Klebeband wird dabei so angebracht, dass es die jeweilige Stoßstelle und einen dort gegebenenfalls vorhandenen Spalt dichtend abdeckt. Hierdurch lassen sich Stoßstellen optimal sichern, die hohen Temperaturbelastungen standhalten müssen.

Eine weitere vorteilhafte Ausgestaltung der Erfindung ist dadurch gekennzeichnet, dass zum Herstellen der Abschottung die Rohr- oder Medienleitung außerhalb der Durchgangsöffnung mit der Manschette ummantelt wird, die Manschette dann an ihrem in die Durchgangsöffnung einzubringenden Ende mittels eines oder mehrerer Einschnürungsmittel entlang ihres Umfangs komprimiert wird und anschließend ein Abschnitt des so komprimierten Endes der Manschette in die Durchgangsöffnung eingebracht wird. Hierdurch lässt sich die Manschette auf einfache Weise in die Durchgangsöffnung einbringen. Bei dem Einschnürungsmittel kann es sich beispielsweise um einen Kabelbinder, einen Draht, einen Spannriemen oder ein Klebeband handeln. Beispielsweise können nur zwei bis drei oder mehrere solcher Einschnürungsmittel auf dem in die Durchgangsöffnung einzubringenden Ende der die Rohr- oder Medienleitung ummantelnden Manschette axial nebeneinander gesetzt und die Manschette zunächst komprimiert werden. Ein Abschnitt des so komprimierten Endes der Manschette wird sodann in die Durchgangsöffnung eingebracht. Hierzu kann jeweils das direkt an der Gebäudewandung anliegende bzw. der Durchgangsöffnung nächstliegende Einschnürungsmittel, z. B. Kabelbinder, geöffnet und entfernt werden. Alternativ ist es auch denkbar, die Manschette bzw. das in die Durchgangsöffnung einzuführende Ende der Manschette mit dem Einschnürungsmittel auf das Innenmaß, z.B. den Innendurchmesser, der Durchgangsöffnung einzuschnüren und die Manschette dann zusammen mit dem Einschnürungsmittel in die Durchgangsöffnung einzuschieben, wobei das Einschnürungsmittel in der Durchgangsöffnung verbleibt.

Des Weiteren wird die oben angegebene Aufgabe durch eine Gebäudewandung mit einem Leitungssystem gelöst, welches mindestens eine Rohr- oder Medienleitung aufweist, die die im Wesentlichen vertikal oder horizontal ausgerichtete Gebäudewandung durchdringt und mit einer entsprechend dem erfindungsgemäßen Verfahren hergestellten Abschottung versehen ist.

Nachfolgend wird die Erfindung anhand einer mehrere Ausführungsbeispiele darstellenden Zeichnung näher erläutert. Es zeigen:
- Fig. 1: einen Abschnitt einer Geschossdecke eines Gebäudes in einem Vertikalschnitt mit einer die Geschossdecke durchdringenden, abgeschotteten Rohr- oder Medienleitung; und
- Fig. 2 bis 5: jeweils einen Abschnitt einer Geschossdecke eines Gebäudes in einem Vertikalschnitt mit mehreren die Geschossdecke durchdringenden, abgeschotteten Rohr- oder Medienleitungen, wobei die Leitungen unterschiedlich angeordnet und/oder unterschiedlich abgeschottet sind.

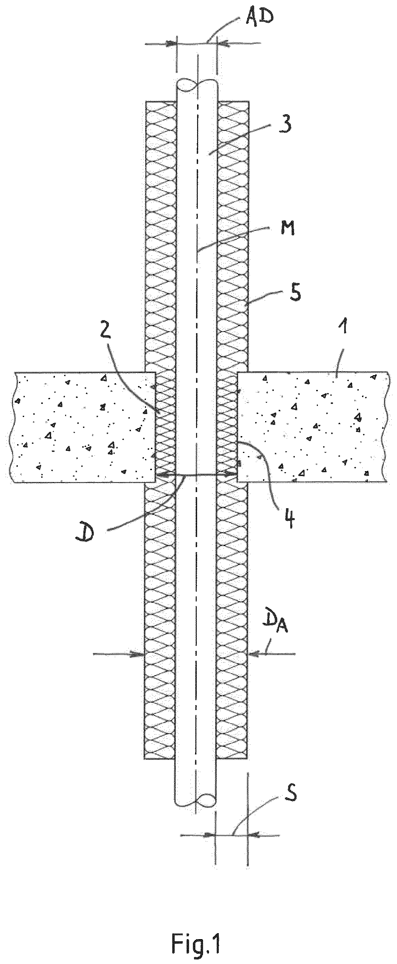

In Fig. 1 ist die der vorliegenden Erfindung zugrundeliegende Idee skizziert. In der Figur ist ein Abschnitt einer massiven Geschossdecke 1 dargestellt, die einen unteren Etagenbereich eines Gebäudes von einem oberen Etagenbereich des Gebäudes trennt. Die Geschossdecke 1 ist als Betondecke mit einer Stärke vom mindestens 150 mm ausgebildet und entspricht beispielsweise der Feuerwiderstandsklasse F90. Die Geschossdecke (Betondecke) 1 trennt somit einen möglicherweise feuerbelasteten Brandabschnitt von einem dem Feuer abgewandten Brandabschnitt.

Die Geschossdecke 1 weist mindestens eine Durchgangsöffnung 2 auf, durch die eine Rohr- oder Medienleitung 3, beispielsweise eine sanitäre Wasserleitung oder wasserführende Heizungsleitung von einem Geschoss in ein nächstes Geschoss geführt ist. Die Rohrleitung 3 ist beispielsweise aus Kupfer, Edelstahl, C-Stahl der Sorte 1.0308 oder 1.2015 oder aus Stahlrohr gemäß DIN EN 10220 oder 10265 hergestellt. Für die metallene, nichtbrennbare Rohrleitung 3 geeignete Rohre sind mit einem Außendurchmesser von ca. 12 mm bis ca. 76 mm erhältlich. Beispielsweise sind Rohre mit folgenden Außendurchmessern erhältlich: 12, 16, 19, 20, 25, 28, 32, 35, 42, 48, 54, 60, 64 und 76 mm. Der maximale Außendurchmesser der Rohrleitung ist allerdings nicht auf 76 mm beschränkt. Vielmehr kommen hinsichtlich der Ausführung der Erfindung auch Rohrleitungen 3 in Betracht, die einen deutlichen größeren Außendurchmesser als 76 mm aufweisen, zum Beispiel Rohrleitungen 3 mit einem Außendurchmesser von 450 mm.

Die Durchgangsöffnung 2 definiert eine Laibung 4 und ist vorzugsweise als Bohrung ausgeführt. Nachdem die durch die Durchgangsöffnung geführte Rohr- oder Medienleitung 3 installiert ist, wird die Leitung 3 mit einer mantelförmigen Brandschutzdämmung versehen, so dass sich eine Abschottung ergibt. Zum Herstellen der Abschottung wird mindestens eine als Rohrschale oder Matte aus Mineralfasern ausgebildete flexible Manschette 5 verwendet und zur Ummantelung der Rohr- oder Medienleitung 3 im Bereich der Durchgangsöffnung 2 derart angeordnet, dass die Manschette 5 unmittelbar an die Laibung 4 der Durchgangsöffnung 2 anschließt und die Öffnung 2 hitzeresistent und rauchdicht verschließt. Es ist kein weiterer Ringspaltverschluss erforderlich.

Wie in Fig. 1 zu erkennen ist, wird erfindungsgemäß zumindest eine solche Manschette 5 zum Herstellen der Abschottung in Bezug auf das quer zur Längsachse M, d.h. im Wesentlichen rechtwinklig oder schräg zur Längsachse M der Rohr- oder Medienleitung 3 gerichtete Innenmaß Dᵢ der Durchgangsöffnung 2 und/oder den Außendurchmesser AD der zu ummantelnden Leitung 3 derart ausgebildet oder ausgewählt, dass das quer zur Längsachse M der Leitung 3 gerichtete Außenmaß D_{A} der Manschette 5 größer ist als das sich parallel zu dem Außenmaß D_{A} erstreckende Innenmaß Dᵢ der Durchgangsöffnung 2, wobei die Manschette 5 eine Dämmdicke (Dämmstärke) S aufweist, die im eingebauten Zustand der Manschette 5 innerhalb der Durchgangsöffnung 2 im Vergleich zur Lage außerhalb der Durchgangsöffnung 2 oder zum nicht eingebauten Zustand der Manschette 5 um ein Verhältnis komprimiert wird, das im Bereich von etwa 5% bis 50%, vorzugsweise im Bereich von ca. 8% bis 33%, besonders bevorzugt im Bereich von ca. 10% bis 30% liegt.

Beispielsweise kann eine Rohrleitung 3 mit einem Außendurchmesser AD von ca. 42 mm mit einer eine Dämmstärke (Dämmdicke) S von ca. 40 mm aufweisenden Manschette 5 in eine als Bohrung ausgeführte, einen Durchmesser D von 122 mm aufweisende Durchgangsöffnung 2 eingebaut werden. Bei abschnittsweisen Komprimierung der Dämmstärke S der Manschette 5 in der Durchgangsöffnung 2 von ursprünglich ca. 40 mm um beispielsweise 33% wäre der Einbau der einen Außendurchmesser AD von ca. 42 mm aufweisenden Rohrleitung 3 in eine Durchgangsöffnung 2, die einen Durchmesser D von nur ca. 95,6 mm aufweist, möglich. In jeweils einen Durchmesser D von 122 mm aufweisende Öffnungen 2 könnten Rohrleitungen 3 mit unterschiedlichem Außendurchmesser, beispielsweise Rohrleitungen 3 mit einem Außendurchmesser AD von ca. 28, 35, 42, 48, 54, 60, 64 und 76 mm in Kombination mit Manschetten 5, die größtenteils verschiedene Dämmstärken S aufweisen, eingebaut werden. Dafür wären nach herkömmlichen Stand der Technik, bei dem hierzu Durchgangsbohrungen (Kernbohrungen) 2 mit unterschiedlichen Durchmessern D hergestellt und darauf abgestimmte, als Rohrschalen ausgebildete spezielle Manschetten verwendet werden, etwa vier unterschiedliche Bohrkopfgrößen erforderlich. Die vorliegende Erfindung ermöglicht dagegen die Realisierung hitzeresistenter und rauchdichter Abschottungen an Gebäudewandungsdurchdringungen in Form von Rohr- und Medienleitungen, die verschiedene Außerdurchmesser AD aufweisen, mit Durchgangsöffnungen 2, welche untereinander denselben Durchmesser D, also nur eine Öffnungsgröße aufweisen.

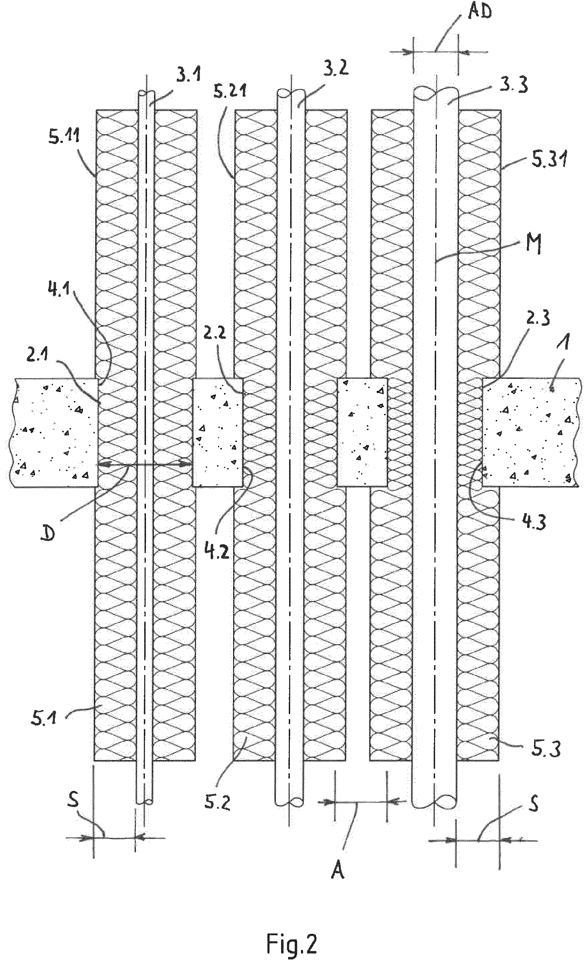

In den Figuren 2 bis 5 sind mehrere Ausführungsbeispiele der Erfindung dargestellt. Fig. 2 zeigt einen Abschnitt einer massiven Geschossdecke 1, welche entsprechende Eigenschaften wie die in Fig. 1 gezeigte Geschossdecke 1 aufweist. Die Geschossdecke 1 weist mehrere, beispielsweise drei Durchgangsöffnungen 2.1, 2.2, 2.3 auf, durch die jeweils eine Rohr- oder Medienleitung 3.1, 3.2, 3.3, beispielsweise sanitäre Wasserleitungen oder wasserführende Heizungsleitungen von einem Geschoss in ein nächstes Geschoss geführt sind. Die Durchgangsöffnungen 2.1, 2.2, 2.3 sind als Bohrungen mit gleichen Durchmesser D ausgeführt. Die Durchgangsöffnungen (Bohrungen) 2.1, 2.2, 2.3 sind in die Geschossdecke 1 beispielsweise derart eingebracht, dass sie zueinander mit einem Abstand A von weniger als 40 mm, vorzugsweise weniger als 35 mm, besonders bevorzugt weniger als 30 mm angeordnet sind.

Die in die Durchgangsöffnungen 2.1, 2.2, 2.3 eingebauten Leitungen 3.1, 3.2, 3.3 haben verschiedene Außendurchmesser AD. Um den ringförmigen Durchgangsbereich zwischen der jeweiligen Leitung 3.1, 3.2, 3.3 und der Laibung der zugeordneten Durchgangsöffnung 2.1, 2.2 oder 2.3 rauchdicht und hitzeresistent zu verschließen, wird die jeweilige Leitung 3.1, 3.2, 3.3 mit einer flexiblen Manschette 5.1, 5.2 oder 5.3 ummantelt, die als Matte oder Rohrschale aus Mineralfasern ausgebildet ist. Die Manschette 5.1, 5.2, 5.3 schließt unmittelbar an die Laibung 4.1, 4.2, 4.3 der Durchgangsöffnung 2.1, 2.2 oder 2.3 sowie dichtend an die Außenseite der jeweiligen Rohr- oder Medienleitung 3.1, 3.2 oder 3.3 an.

Die in Fig. 2 dargestellten flexiblen Manschetten 5.1, 5.2, 5.3 weisen im Wesentlichen die gleiche Dämmstärke S auf. Es liegt allerdings auch im Rahmen der Erfindung, dass die Manschetten 5.1, 5.2, 5.3 unterschiedliche Dämmdicken und/oder unterschiedliche Rohdichten aufweisen. Die Durchgangsöffnungen 2.1, 2.2, 2.3 und die Manschetten 5.1, 5.2, 5.3 sind zueinander so bemessen bzw. ausgewählt, dass die Manschetten 5.1, 5.2, 5.3 im Bereich der Durchgangsöffnungen mehr oder weniger stark radial komprimiert sind. Die Manschette 5.1, welche die den geringsten Außendurchmesser aufweisende Rohr- oder Medienleitung 3.1 ummantelt, ist in der Durchgangsöffnung 2.1 nur geringfügig radial komprimiert, während die Manschetten 5.2, 5.3, welche die größere Außendurchmesser aufweisende Rohr- oder Medienleitungen 3.2, 3.3 ummanteln, in den Durchgangsöffnungen 2.2, 2.3 deutlich mehr radial komprimiert sind, beispielsweise um bis zu ca. 50%, insbesondere bis zu ca. 40%, vorzugsweise um bis zu 33%, besonders bevorzugt bis zu 30% der Dämmstärke S der betreffenden Manschette 5.2 oder 5.3. Die Manschetten 5.1, 5.2, 5.3 werden hinsichtlich ihrer Länge so ausgewählt bzw. zugeschnitten und dann montiert, dass sie aus der Durchgangsöffnung beidseitig herausragen. Der aus der Durchgangsöffnung 2.1, 2.2, 2.3 herausragende Abschnitt 5.11, 5.21, 5.31 der Manschette 5.1, 5.2, 5.3 weist beispielsweise eine Länge im Bereich von 2 cm bis 110 cm, vorzugsweise im Bereich von 2 cm bis 60 cm, insbesondere 2 cm bis 20 cm auf.

Nahe der Durchgangsöffnung 2.1, 2.2, 2.3, beispielsweise in einem vertikalen Abstandsbereich von bis zu 20 cm, gemessen von der Oberseite oder Unterseite der Geschossdecke 1, wird die Manschette 5.1, 5.2, 5.3 mit Klebeband (nicht gezeigt), vorzugsweise mit nicht brennbarem oder schwer entflammbarem Klebeband, z. B. Aluminiumklebeband, radial gesichert.

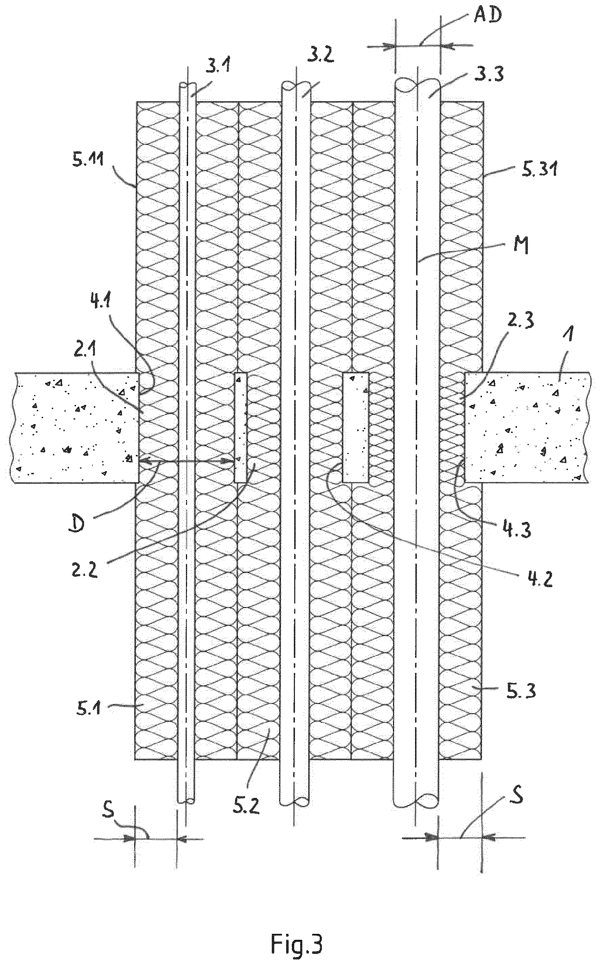

Das in Fig. 3 dargestellte Ausführungsbeispiel unterscheidet sich von dem in Fig. 2 gezeigten Beispiel dadurch, dass die Durchgangsöffnungen (Bohrungen) 2.1, 2.2, 2.3 in der Geschossdecke 1 derart angeordnet sind, dass die darin anschließend eingebrachten Manschetten 5.1, 5.2, 5.3 sich außerhalb der Durchgangsöffnungen 2.1, 2.2, 2.3 am Außenumfang berühren.

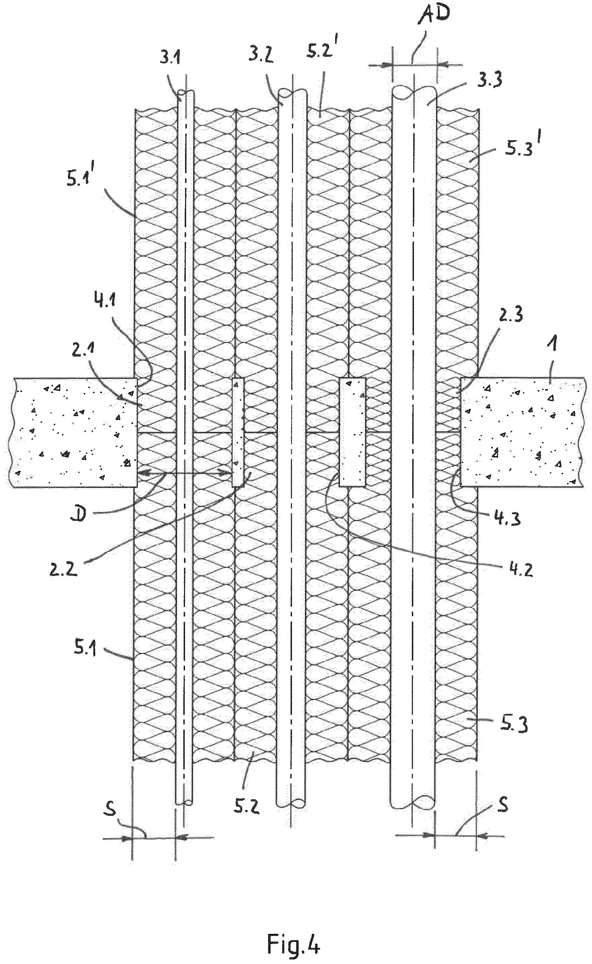

Das in Fig. 4 dargestellte Ausführungsbeispiel unterscheidet sich von den in den Figuren 2 und 3 gezeigten Beispielen dadurch, dass in die Durchgangsöffnungen 2.1, 2.2, 2.3 jeweils zwei Manschetten 5.1, 5.1', 5.2, 5.2', 5.3, 5.3` der oben genannten Art von den gegenüberliegenden Enden der jeweiligen Durchgangsöffnung 2.1, 2.2 oder 2.3 aus eingebracht sind, so dass die Manschetten 5.1, 5.1', 5.2, 5.2', 5.3, 5.3' innerhalb der Durchgangsöffnung 2.1, 2.2 oder 2.3 im Wesentlichen spaltfrei axial aufeinander folgen bzw. aneinander liegen.

Zum Herstellen der Abschottung wird die Rohr- oder Medienleitung 3.1, 3.2, 3.3 zunächst außerhalb der Durchgangsöffnung 2.1, 2.2, 2.3 mit der Manschette 5.1, 5.2, 5.3 ummantelt. Dann wird die Manschette 5.1, 5.2, 5.3 an ihrem in die Durchgangsöffnung einzubringenden Ende beispielsweise mittels Einschnürungsmitteln (nicht gezeigt) entlang ihres Umfangs komprimiert und anschließend ein Abschnitt des so komprimierten Endes der Manschette 5.1, 5.2, 5.3 in die Durchgangsöffnung 2.1, 2.2, 2.3 eingebracht. Hierzu kann jeweils das direkt an der Gebäudewandung 1 anliegende bzw. der Durchgangsöffnung 2.1, 2.2, 2.3 nächstliegende Einschnürungsmittel geöffnet und entfernt werden. Als Einschnürungsmittel können dabei beispielsweise Kabelbinder, Draht, Spannriemen oder Klebeband verwendet werden.

Alternativ kann die Manschette 5.1, 5.2, 5.3 bzw. das in die Durchgangsöffnung 2.1, 2.2, 2.3 einzuführende Ende der Manschette 5.1, 5.2, 5.3 mit dem Einschnürungsmittel (nicht gezeigt) auf das Innenmaß, z.B. den Innendurchmesser D, der Durchgangsöffnung 2.1, 2.2, 2.3 eingeschnürt und die Manschette 5.1, 5.2, 5.3 dann zusammen mit dem Einschnürungsmittel in die Durchgangsöffnung 2.1, 2.2, 2.3 eingeschoben werden, wobei das Einschnürungsmittel in der Durchgangsöffnung 2.1, 2.2, 2.3 verbleibt.

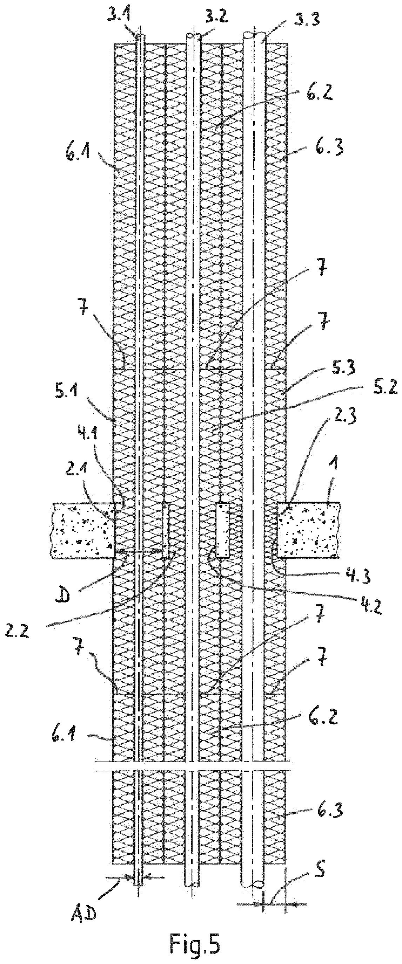

Ein weiteres Ausführungsbeispiel ist in Fig. 5 gezeigt, gemäß dem die Rohr- oder Medienleitungen 3.1, 3.2, 3.3 einseitig oder beidseitig der Durchgangsöffnungen 2.1, 2.2, 2.3 mit einer oder mehreren Rohrschalen 6.1, 6.2, 6.3 wärme- und/oder schallisoliert werden. Dabei werden die Rohrschalen 6.1, 6.2, 6.3 mittels Klebeband (nicht gezeigt), vorzugsweise nicht brennbarem oder schwer entflammbarem Klebeband, beispielsweise Aluminiumfolien-Klebeband, mit der betreffenden Manschette 5.1, 5.2 oder 5.3 verbunden.

Eine weitere Ausgestaltung der Erfindung ist dadurch gekennzeichnet, dass die Manschetten 5.1, 5.2, 5.3 bzw. Rohrschalen 6.1, 6.2, 6.3 in dem für den Brandschutz relevanten oder notwendigen Bereich mit Klebeband (nicht gezeigt), vorzugsweise einem nicht brennbarem oder schwer entflammbarem Klebeband, beispielsweise Aluminiumfolien-Klebeband, gesichert werden. Hierzu werden die Längsschlitze der Rohrschalen 6.1, 6.2, 6.3 sowie die Stoßstellen 7 zwischen Manschette 5.1, 5.2 oder 5.3 und Rohrschalen 6.1, 6.2 oder 6.3 mit dem Klebeband (nicht gezeigt) in einer Breite im Bereich von ca. 2 bis 20 cm, vorzugsweise ca. 5 bis 10 cm abdichtend überklebt. Die Verklebung kann einlagige ohne Überlappung oder auch mit Überlappung erfolgen. Das Klebeband kann an den Manschetten 5.1, 5.2, 5.3 und/oder Rohrschalen 6.1, 6.2, 6.3 symmetrisch aber auch asymmetrisch angebracht werden. Eine Mindestauflagebreite des Klebebandes kann dabei beispielsweise im Bereich von 5 bis 150 mm, vorzugsweise 10 bis 50 mm betragen. Die Länge der als Dämmstoffstücke ausgebildeten Manschetten 5.1, 5.2, 5.3 und/oder Rohrschalen 6.1, 6.2, 6.3, die vorzugsweise nur an den Stoßstellen mit dem Klebeband verklebt werden können, beträgt beispielsweise maximal 1200 mm.

Abweichend von den in der Zeichnung dargestellten Ausführungsbeispielen kann das erfindungsgemäße Verfahren zur Trennung bzw. Abschottung von Brandabschnitten auch bei Gebäudewandungsdurchdringungen mit Rohr- und Medienleitungen an vertikal ausgerichteten Wandungen eines Gebäudes angewandt werden. Des Weiteren können in der betreffenden Gebäudewandung 1 auch nur zwei oder mehr als drei Durchgangsöffnungen, vorzugsweise Durchgangsbohrungen 2.1, 2.2, 2.3 ausgebildet und darin eine entsprechende Anzahl von Rohr- und Medienleitungen 3.1, 3.2, 3.3 mit flexiblen Manschetten 5.1, 5.2, 5.3 der oben genannten Art zur Rohrabschottung eingebaut sein.

## Patentansprüche

1. Verfahren zum Herstellen einer Abschottung an
Gebäudewandungsdurchdringungen, wobei mindestens eine Wandung (1) eines Gebäudes von Rohr- oder Medienleitungen (3.1, 3.2, 3.3) durchdrungen ist oder wird, wobei die Rohr- oder Medienleitungen durch in der Gebäudewandung vorhandene oder hergestellte Durchgangsöffnungen (2.1, 2.2, 2.3), vorzugsweise Durchgangsbohrungen, geführt sind oder werden, wobei die jeweilige Durchgangsöffnung zumindest eine Laibung (4.1, 4.2, 4.3) definiert, wobei zum Herstellen der Abschottung als Rohrschalen aus Mineralfasern ausgebildete flexible Manschetten (5.1, 5.2, 5.3) verwendet und zur Ummantelung der Rohr- oder Medienleitungen im Bereich der Durchgangsöffnungen derart angeordnet werden, dass die betreffende Manschette (5.1, 5.2, 5.3) unmittelbar an die Laibung (4.1, 4.2, 4.3) der betreffenden Durchgangsöffnung anschließt und die Durchgangsöffnung hitzeresistent und rauchdicht verschließt, wobei zumindest eine solche Manschette (5.1, 5.2, 5.3) zum Herstellen der Abschottung in Bezug auf das quer zur Längsachse (M) der Rohr- oder Medienleitung (3.1, 3.2, 3.3) gerichtete Innenmaß (D) der Durchgangsöffnung (2.1, 2.2, 2.3) und/oder den Außendurchmesser (AD) der zu ummantelnden Rohr- oder Medienleitung (3.1, 3.2, 3.3) derart ausgebildet oder ausgewählt wird, dass das quer zur Längsachse (M) der Rohr- oder Medienleitung (3.1, 3.2, 3.3) gerichtete Außenmaß (D_{A}) der Manschette (5.1, 5.2, 5.3) größer ist als das sich im Wesentlichen parallel zu dem Außenmaß (D_{A}) erstreckende Innenmaß (D) der Durchgangsöffnung (2.1, 2.2, 2.3), wobei die Manschette (5.1, 5.2, 5.3) eine Dämmdicke (S) aufweist, die im eingebauten Zustand der Manschette in der Durchgangsöffnung (2.1, 2.2, 2.3) im Vergleich zur Lage außerhalb der Durchgangsöffnung (2.1, 2.2, 2.3) oder zum nicht eingebauten Zustand der Manschette (5.1, 5.2, 5.3) um ein Verhältnis komprimiert wird, das im Bereich von 5% bis 50%, vorzugsweise im Bereich von 8% bis 33%, besonders bevorzugt im Bereich von 10% bis 30% liegt, **dadurch gekennzeichnet, dass** eine Vielzahl von Gebäudewandungsdurchdringungen des Gebäudes abgeschottet werden, wobei eine Vielzahl der Durchgangsöffnungen (2.1, 2.2, 2.3), vorzugsweise Durchgangsbohrungen, der Gebäudewandungsdurchdringungen das gleiche Innenmaß oder den gleichen Durchmesser (D) aufweist, wobei durch eine Vielzahl solcher Durchgangsöffnungen (2.1, 2.2, 2.3) mit gleichem Innenmaß oder gleichem Durchmesser (D) Rohr- oder Medienleitungen (3.1, 3.2, 3.3) mit unterschiedlichen Außendurchmessern (AD) geführt sind oder werden, wobei zum Herstellen der Abschottungen jeweils mindestens eine Manschette (5.1, 5.2, 5.3) der voranstehend angegebenen Art verwendet und zur Ummantelung der Rohr- oder Medienleitung (3.1, 3.2, 3.3) im Bereich der betreffenden Durchgangsöffnung (2.1, 2.2, 2.3) derart angeordnet wird, dass die Manschette (5.1, 5.2, 5.3) unmittelbar an die Laibung (4.1, 4.2, 4.3) der Durchgangsöffnung (2.1, 2.2, 2.3) anschließt und die Durchgangsöffnung (2.1, 2.2, 2.3) hitzeresistent und rauchdicht verschließt, und wobei mindestens eine der Manschetten (5.1, 5.2, 5.3) derart in die betreffende Durchgangsöffnung (2.1, 2.2, 2.3) eingebracht wird, dass die Manschette (5.1, 5.2, 5.3) im eingebauten Zustand in der Durchgangsöffnung (2.1, 2.2, 2.3) komprimiert ist.

2. Verfahren nach Anspruch 1, **dadurch gekennzeichnet, dass** die mindestens eine Manschette (5.1, 5.2, 5.3) eine Dämmdicke (S) aufweist, die im eingebauten Zustand der Manschette (5.1, 5.2, 5.3) in der Durchgangsöffnung (2.1, 2.2, 2.3) im Vergleich zur Lage außerhalb der Durchgangsöffnung (2.1, 2.2, 2.3) oder zum nicht eingebauten Zustand der Manschette (5.1, 5.2, 5.3) um ein Verhältnis komprimiert wird, welches im Bereich von 15% bis 40%, vorzugsweise im Bereich von 20% bis 33%, besonders bevorzugt im Bereich von 20% bis 30% liegt.

3. Verfahren nach Anspruch 1 oder 2, **dadurch gekennzeichnet, dass** die in verschiedene der Durchgangsöffnungen (2.1, 2.2, 2.3) angeordneten Manschetten (5.1, 5.2, 5.3) unterschiedliche Dämmdicken (S) aufweisen.

4. Verfahren nach einem der Ansprüche 1 bis 3, **dadurch gekennzeichnet, dass** die in verschiedene der Durchgangsöffnungen (2.1, 2.2, 2.3) angeordneten flexiblen Manschetten (5.1, 5.2, 5.3) unterschiedliche Rohdichten aufweisen.

5. Verfahren nach einem der Ansprüche 1 bis 4, **dadurch gekennzeichnet, dass** zwei oder mehr der Durchgangsöffnungen (2.1, 2.2, 2.3), vorzugsweise Durchgangsbohrungen, in der gleichen Gebäudewandung (1) derart angeordnet sind oder werden, dass sie zueinander mit einem Abstand (A) von weniger als 40 mm, vorzugsweise weniger als 35 mm, besonders bevorzugt weniger als 30 mm angeordnet sind.

6. Verfahren nach einem der Ansprüche 1 bis 5, **dadurch gekennzeichnet, dass** zwei oder mehr der Durchgangsöffnungen (2.1, 2.2, 2.3), vorzugsweise Durchgangsbohrungen, in der gleichen Gebäudewandung (1) derart angeordnet sind oder werden, dass die darin anschließend eingebrachten Manschetten (5.1, 5.2, 5.3) sich außerhalb der Durchgangsöffnungen (2.1, 2.2, 2.3) am Außenumfang berühren.

7. Verfahren nach einem der Ansprüche 1 bis 6, **dadurch gekennzeichnet, dass** die mindestens eine Manschette (5.1, 5.2, 5.3) eine Länge aufweist, die zumindest der Länge oder Tiefe der Durchgangsöffnung (2.1, 2.2, 2.3) entspricht.

8. Verfahren nach einem der Ansprüche 1 bis 6, **dadurch gekennzeichnet, dass** die mindestens eine Manschette (5.1, 5.2, 5.3) so angeordnet wird, dass sie aus der Durchgangsöffnung (2.1, 2.2, 2.3) zumindest einseitig herausragt.

9. Verfahren nach einem der Ansprüche 1 bis 6, **dadurch gekennzeichnet, dass** die mindestens eine Manschette (5.1, 5.2, 5.3) so angeordnet wird, dass sie aus der Durchgangsöffnung (2.1, 2.2, 2.3) beidseitig herausragt.

10. Verfahren nach einem der Ansprüche 1 bis 6, **dadurch gekennzeichnet, dass** in die Durchgangsöffnung zwei Manschetten (5.1, 5.1', 5.2, 5.2', 5.3, 5.3') der in Anspruch 1 angegebenen Art von den gegenüberliegenden Enden der Durchgangsöffnung aus eingebracht werden, so dass die beiden Manschetten (5.1, 5.1', 5.2, 5.2', 5.3, 5.3') in der Durchgangsöffnung (2.1, 2.2, 2.3) im Wesentlichen spaltfrei axial aufeinander folgen oder axial aneinander liegen.

11. Verfahren nach einem der Ansprüche 1 bis 10, **dadurch gekennzeichnet, dass** die Rohr- oder Medienleitung (3.1, 3.2, 3.3) einseitig oder beidseitig der Durchgangsöffnung (2.1, 2.2, 2.3) mit einer oder mehreren Rohrschalen (6.1, 6.2, 6.3) oder Matten wärme- und/oder schallisoliert wird.

12. Verfahren nach Anspruch 11, **dadurch gekennzeichnet, dass** mindestens eine der Rohrschalen (6.1, 6.2, 6.3) oder Matten mittels Klebeband, vorzugsweise nicht brennbarem oder schwer entflammbarem Klebeband, besonders bevorzugt aluminiumfolienkaschiertem Klebeband, mit der Manschette (5.1, 5.2, 5.3) verbunden wird.

13. Verfahren nach einem der Ansprüche 1 bis 12, **dadurch gekennzeichnet, dass** zum Herstellen der Abschottung die Rohr- oder Medienleitungen (3.1, 3.2, 3.3) außerhalb der Durchgangsöffnungen (2.1, 2.2, 2.3) mit den Manschetten (5.1, 5.2, 5.3) ummantelt werden, wobei mindestens eine dieser Manschetten (5.1, 5.2, 5.3) dann an ihrem in die betreffende Durchgangsöffnung (2.1, 2.2, 2.3) einzubringenden Ende mittels eines oder mehrerer Einschnürungsmittel entlang ihres Umfangs komprimiert wird und anschließend ein Abschnitt des so komprimierten Endes der Manschette (5.1, 5.2, 5.3) in die Durchgangsöffnung (2.1, 2.2, 2.3) eingebracht wird.

14. Gebäudewandung mit einem Leitungssystem umfassend Rohr- oder Medienleitungen (3.1, 3.2, 3.3), die die Gebäudewandung (1) mit einer Abschottung durchdringen, wobei die Abschottung gemäß einem Verfahren nach einem der Ansprüche 1 bis 13 hergestellt ist.

## Claims

1. Method for producing a bulkhead at building wall penetrations, wherein at least one wall (1) of a building is or will be penetrated by pipe or media lines (3.1, 3.2, 3.3), wherein the pipe or media lines are or will be routed through passage openings (2.1, 2.2, 2.3), preferably passage bore-holes, the respective passage opening defining at least one embrasure (4.1, 4.2, 4.3), wherein flexible sleeves (5.1, 5.2, 5.3) formed as pipe shells made of mineral fibers are used to produce the bulkhead and are arranged to encase the pipe or media lines in the area of the passage openings in such a way that that the relevant sleeve (5.1, 5.2, 5.3) is directly connected to the embrasure (4.1, 4.2, 4.3) of the relevant passage opening and seals the passage opening in a heat-resistant and smoke-tight manner, at least one such sleeve (5.1, 5.2, 5.3) for producing the bulkhead with respect to the internal dimension (D) of the passage opening (2.1, 2.2, 2.3) directed transversely to the longitudinal axis (M) of the pipe or media line and/or the external diameter (AD) of the pipe or media line (3.1, 3.2, 3.3) to be encased is designed or selected in such a way that the external dimension (D_{A}) of the sleeve (5.1, 5.2, 5.3) directed transversely to the longitudinal axis (M) of the pipe or media line (3.1, 3.2, 3.3) is greater than the internal dimension (D) of the passage opening (2.1, 2.2, 2.3) extending essentially parallel to the external dimension (D_{A}), the sleeve (5.1, 5.2, 5.3) having an insulation thickness (S) which, in the installed state of the sleeve in the passage opening (2.1, 2.2, 2.3), is compressed in comparison to the position outside the passage opening (2.1, 2.2, 2.3) or to the non-installed state of the sleeve (5.1, 5.2, 5.3) by a ratio which is in the range from 5% to 50%, preferably in the range from 8% to 33%, particularly preferably in the range from 10% to 30%, **characterized in that** a plurality of building wall penetrations of the building are sealed off, a plurality of the passage openings (2.1, 2.2, 2.3), preferably passage bore-holes, of the building wall penetrations have the same internal dimension or the same diameter (D), wherein pipe or media lines (3.1, 3.2, 3.3) having different external diameters (AD) are or will be routed through a plurality of such passage openings having the same internal dimension or the same diameter (D), wherein for producing the bulkheads in each case at least one sleeve (5.1, 5.2, 5.3) of the above-mentioned type being used, which sleeve is arranged in such a way that it encases the pipe or media line (3.1, 3.2, 3.3) in the region of the respective passage opening (2.1, 2.2, 2.3) in such a way that the sleeve (5.1, 5.2, 5.3) is directly connected to the embrasure (4.1, 4.2, 4.3) of the passage opening (2.1, 2.2, 2.3) and closes the passage opening (2.1, 2.2, 2.3) in a heat-resistant and smoke-tight manner, and wherein at least one of the sleeves (5.1, 5.2, 5.3) is introduced into the respective passage opening (2.1, 2.2, 2.3) in such a way that the sleeve (5.1, 5.2, 5.3) is compressed in the installed state in the passage opening (2.1, 2.2, 2.3).

2. Method according to claim 1, **characterized in that** the at least one sleeve (5.1, 5.2, 5.3) has a insulation thickness (S) which, in the fitted state of the sleeve (5.1, 5.2, 5.3) in the passage opening (2.1, 2.2, 2.3), is compressed by a ratio compared to the position outside the passage opening (2.1, 2.2, 2.3) or to the non-installed state of the sleeve (5.1, 5.2, 5.3) by a ratio which is in the range of 15% to 40%, preferably in the range of 20% to 33%, particularly preferred in the range of 20% to 30%.

3. Method according to claim 1 or 2, **characterized in that** the sleeves (5.1, 5.2, 5.3) arranged in different ones of the passage openings (2.1, 2.2, 2.3) have different insulation thicknesses (S).

4. Method according to any one of the claims 1 to 3, **characterized in that** the flexible sleeves (5.1, 5.2, 5.3) arranged in different ones of the passage openings (2.1, 2.2, 2.3) have different bulk densities.

5. Method according to any one of the claims 1 to 4, **characterized in that** two or more of the passage openings (2.1, 2.2, 2.3), preferably passage bore-holes, are or are arranged in the same building wall (1) in such a way that they are arranged at a distance (A) of less than 40 mm, preferably less than 35 mm, particularly preferably less than 30 mm, from one another.

6. Method according to any one of the claims 1 to 5, **characterized in that** two or more of the passage openings (2.1, 2.2, 2.3), preferably passage bore-holes, are or are arranged in the same building wall (1) such that the sleeves (5.1, 5.2, 5.3) subsequently inserted therein touch one another on the outer circumference outside the passage openings (2.1, 2.2, 2.3).

7. Method according to any one of the claims 1 to 6, **characterized in that** the at least one sleeve (5.1, 5.2, 5.3) has a length that corresponds at least to the length or depth of the passage opening (2.1, 2.2, 2.3).

8. Method according to any one of claims 1 to 6, **characterized in that** the at least one sleeve (5.1, 5.2, 5.3) is arranged so that it protrudes out of the passage opening (2.1, 2.2, 2.3) on at least one side.

9. Method according to any one of claims 1 to 6, **characterized in that** the at least one sleeve (5.1, 5.2, 5.3) is arranged so that it protrudes out of the passage opening (2.1, 2.2, 2.3) on both sides.

10. Method according to any one of the claims 1 to 6, **characterized in that** two sleeves (5.1, 5.1', 5.2, 5.2', 5.3, 5.3') of the type indicated in claim 1 are introduced into the passage opening from the opposite ends of the passage opening so that the two sleeves (5.1, 5.1', 5.2, 5.2', 5.3, 5.3') in the passage opening (2.1, 2.2, 2.3) follow one another axially essentially without a gap or lie axially against each other.

11. Method according to any one of the claims 1 to 10, **characterized in that** the pipe or media line (3.1, 3.2, 3.3) is heat and/or sound insulated on one or both sides of the passage opening (2.1, 2.2, 2.3) with one or more pipe shells (6.1, 6.2, 6.3) or mats.

12. Method according to claim 11, **characterized in that** at least one of the pipe shells (6.1, 6.2, 6.3) or mats is connected to the sleeve (5.1, 5.2, 5.3) by means of adhesive tape, preferably non-flammable or flame-retardant adhesive tape, particularly preferably aluminium-foil-backed adhesive tape.

13. Method according to any one of claims 1 to 12, **characterized in that**, to produce the bulkhead, the pipe or media lines (3.1, 3.2, 3.3) are encased outside the passage openings (2.1, 2.2, 2.3) with the sleeves (5.1, 5.2, 5.3), at least one of these sleeves (5.1, 5.2, 5.3) then being compressed along its circumference at its end to be introduced into the relevant passage opening (2.1, 2.2, 2.3) by means of one or more constricting means, and then a section of the end of the sleeve (5.1, 5.2, 5.3) compressed in this way is introduced into the passage opening (2.1, 2.2, 2.3).

14. Building wall with a conduit system comprising pipe or media lines (3.1, 3.2, 3.3) which pass through the building wall (1) having a bulkhead produced in accordance with any one of claims 1 to 13.

## Revendications

1. Procédé de fabrication d'un calfeutrement au niveau de traversées de parois de bâtiment, dans lequel au moins un mur (1) d'un bâtiment est, ou sera, traversé par des tubes ou des conduites de fluides (3.1, 3.2, 3.3), dans lequel les tubes ou les conduites de fluides sont, ou seront, guidé(e)s à travers des ouvertures de passage (2.1, 2.2, 2.3), de préférence des percées, présentes ou fabriquées dans le mur du bâtiment, dans lequel l'ouverture de passage respective définit au moins une embrasure (4.1, 4.2, 4.3), des manchons flexibles (5.1, 5.2, 5.3) réalisés sous la forme de coques tubulaires en fibres minérales étant utilisés pour la réalisation du calfeutrement et étant disposés pour le gainage des tubes ou des conduites de fluides dans la zone des ouvertures de passage de telle sorte que le manchon concerné (5.1, 5.2, 5.3) est directement appliqué sur l'embrasure (4.1, 4.2, 4.3) de l'ouverture de passage concernée et ferme l'ouverture de passage de manière résistante à la chaleur et étanche à la fumée, au moins un tel manchon (5.1, 5.2, 5.3) pour réaliser le calfeutrement par rapport à la dimension intérieure (D) de l'ouverture de passage (2.1, 2.2, 2.3) orientée transversalement à l'axe longitudinal (M) du tube ou de la conduite de fluide (3.1, 3.2, 3.3) et/ou au diamètre extérieur (AD) du tube ou de la conduite de fluide à gainer (3.1, 3.2, 3.3) étant conçu ou choisi de telle sorte que la dimension extérieure (D_{A}) du manchon (5.1, 5.2, 5.3) est plus grande que la dimension intérieure (D) de l'ouverture de passage (2.1, 2.2, 2.3) qui s'étend sensiblement parallèlement à la dimension extérieure (D_{A}), le manchon (5.1, 5.2, 5.3) présentant une épaisseur d'isolant (S) qui, à l'état monté du manchon dans l'ouverture de passage (2.1, 2.2, 2.3), est supérieure à celle du manchon (5.1, 5.2, 5.3) d'un rapport qui se situe dans la plage de 5 % à 50 %, de préférence dans la plage de 8 % à 33 %, de manière particulièrement préférée dans la plage de 10 % à 30 %, **caractérisé en ce qu'**une pluralité de traversées de parois de bâtiment du bâtiment sont calfeutrées, et que par une pluralité des ouvertures de passage (2.1, 2.2, 2.3), de préférence des percées des traversées de parois de bâtiment de la même dimension intérieure ou du même diamètre (D), des tubes ou des conduites de fluides (3.1, 3.2, 3.3) ayant différents diamètres extérieurs (AD) sont, ou seront, conduit(e)s, au moins un manchon (5.1, 5.2, 5.3) du type indiqué ci-dessus étant utilisé et disposé pour gainer le tube ou la conduite de fluides (3.1, 3.2, 3.3) dans la zone de l'ouverture de passage concernée (2.1, 2.2, 2.3) de telle sorte que le manchon (5.1, 5.2, 5.3) est directement appliqué sur l'embrasure (4.1, 4.2, 4.3) de l'ouverture de passage (2.1, 2.2, 2.3) et ferme l'ouverture de passage (2.1, 2.2, 2.3) de manière résistante à la chaleur et étanche à la fumée, et dans lequel au moins l'un des manchons (5.1, 5.2, 5.3) se raccordant à l'ouverture de passage (2.1, 2.2, 2.3) est introduit dans l'ouverture de passage (2.1, 2.2, 2.3) concernée de telle sorte que le manchon (5.1, 5.2, 5.3) est comprimé à l'état monté dans l'ouverture de passage (2.1, 2.2, 2.3).

2. Procédé selon la revendication 1, **caractérisé en ce que** le au moins un manchon (5.1, 5.2, 5.3) présente une épaisseur d'isolant (S) qui, à l'état monté du manchon (5.1, 5.2, 5.3) dans l'ouverture de passage (2.1, 2.2, 2.3), comparé à la situation hors de l'ouverture de passage (2.1, 2.2, 2.3) ou par rapport à l'état non installé du manchon (5.1, 5.2, 5.3) est comprimée d'un rapport qui se situe dans la plage de 15% à 40%, de préférence dans la plage de 20% à 33%, de manière particulièrement préférée dans la plage de 20% à 30%.

3. Procédé selon la revendication 1 ou 2, **caractérisé en ce que** les manchons (5.1, 5.2, 5.3) disposés dans différentes ouvertures de passage (2.1, 2.2, 2.3) présentent différentes épaisseurs d'isolant (S).

4. Procédé selon l'une des revendications 1 à 3, **caractérisé en ce que** les manchons flexibles (5.1, 5.2, 5.3) disposés dans différentes ouvertures de passage (2.1, 2.2, 2.3) présentent des densités brutes différentes.

5. Procédé selon l'une quelconque des revendications 1 à 4, **caractérisé en ce que** deux ou plusieurs des ouvertures de passage (2.1, 2.2, 2.3), de préférence des percées, sont, ou seront, disposées dans la même paroi de bâtiment (1) de telle sorte qu'elles sont disposées l'une par rapport à l'autre à une distance (A) inférieure à 40 mm, de préférence inférieure à 35 mm, de manière particulièrement préférée inférieure à 30 mm.

6. Procédé selon l'une des revendications 1 à 5, **caractérisé en ce que** deux ou plusieurs des ouvertures de passage (2.1, 2.2, 2.3), de préférence des percées, sont, ou seront, disposées dans la même paroi de bâtiment (1) de telle sorte que les manchons (5.1, 5.2, 5.3) qui y sont ensuite insérés se touchent sur la périphérie extérieure, à l'extérieur des ouvertures de passage (2.1, 2.2, 2.3).

7. Procédé selon l'une des revendications 1 à 6, **caractérisé en ce que** le au moins un manchon (5.1, 5.2, 5.3) présente une longueur qui correspond au moins à la longueur ou à la profondeur de l'ouverture de passage (2.1, 2.2, 2.3).

8. Procédé selon l'une des revendications 1 à 6, **caractérisé en ce que** le au moins un manchon (5.1, 5.2, 5.3) est disposé de telle sorte qu'il dépasse de l'ouverture de passage (2.1, 2.2, 2.3) au moins d'un côté.

9. Procédé selon l'une des revendications 1 à 6, **caractérisé en ce que** le au moins un manchon (5.1, 5.2, 5.3) est disposé de telle sorte qu'il dépasse des deux côtés de l'ouverture de passage (2.1, 2.2, 2.3).

10. Procédé selon l'une quelconque des revendications 1 à 6, **caractérisé en ce que** deux manchons (5.1, 5.1', 5.2, 5.2', 5.3, 5.3') du type indiqué dans la revendication 1 sont introduits dans l'ouverture de passage à partir des extrémités opposées de l'ouverture de passage, de sorte que les deux manchons (5.1, 5.1', 5.2, 5.2', 5.3, 5.3') se suivent axialement ou sont axialement adjacents l'un par rapport à l'autre dans l'ouverture de passage (2.1, 2.2, 2.3), sensiblement sans interstice.

11. Procédé selon l'une des revendications 1 à 10, **caractérisé en ce que** le tube ou la conduite de fluide (3.1, 3.2, 3.3) est isolé(e) thermiquement et/ou phoniquement d'un côté ou des deux côtés de l'ouverture de passage (2.1, 2.2, 2.3) avec une ou plusieurs coques tubulaires (6.1, 6.2, 6.3) ou mats.

12. Procédé selon la revendication 11, **caractérisé en ce qu'**au moins l'un(e) des coques tubulaires (6.1, 6.2, 6.3) ou des mats est relié(e) au manchon (5.1, 5.2, 5.3) au moyen d'un ruban adhésif, de préférence d'un ruban adhésif non inflammable ou difficilement inflammable, de préférence encore d'un ruban adhésif revêtu d'une feuille d'aluminium.

13. Procédé selon l'une des revendications 1 à 12, **caractérisé en ce que,** pour réaliser le calfeutrement, les tubes ou conduites de fluides (3.1, 3.2, 3.3) sont entouré(e)s des manchons (5.1, 5.2, 5.3) à l'extérieur des ouvertures de passage (2.1, 2.2, 2.3), au moins l'un de ces manchons (5.1, 5.2, 5.3) est ensuite comprimé le long de sa circonférence à son extrémité devant être introduite dans l'ouverture de passage (2.1, 2.2, 2.3) concernée à l'aide d'un ou de plusieurs moyens de rétrécissement, puis une partie de l'extrémité ainsi comprimée du manchon (5.1, 5.2, 5.3) est introduite dans l'ouverture de passage (2.1, 2.2, 2.3).

14. Paroi de bâtiment ayant un système de conduites comprenant des tubes ou des conduites de fluides (3.1, 3.2, 3.3) qui traversent la paroi de bâtiment (1) avec un calfeutrement, le calfeutrement étant réalisé selon un procédé selon l'une des revendications 1 à 13.
